Europäisches Patentamt

European Patent Office

Office européen des brevets

(19)

(11) **EP 1 016 890 A1**

(12) ## DEMANDE DE BREVET EUROPEEN

(43) Date de publication:
**05.07.2000 Bulletin 2000/27**

(51) Int Cl.⁷: **G02B 26/08**, G02B 5/10,
G02B 7/182, G21K 1/06

(21) Numéro de dépôt: **99403263.9**

(22) Date de dépôt: **23.12.1999**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **31.12.1998 FR 9816728**

(71) Demandeur: **SOCIETE EUROPEENNE DE SYSTEMES OPTIQUES S.E.S.O.**
**13792 Aix-en-Provence Cedex 3 (FR)**

(72) Inventeurs:
- **Carre, Jean-Fran**
  **84120 Pertuis (FR)**
- **Detaille, Michel**
  **13012 Marseille (FR)**

(74) Mandataire: **Jacquard, Philippe Jean-Luc et al**
**CABINET ORES,**
**6, Avenue de Messine**
**75008 Paris (FR)**

(54) **Procédé de réalisation de surfaces de focalisation de faisceaux, notamment à incidence rasante et dispositif pour sa mise en oeuvre**

(57)     L'invention concerne un procédé de fabrication d'une surface ayant une forme de secteur angulaire de tronc de cône de focalisation de faisceaux optiques. Par secteur angulaire de tronc de cône, on entend un morceau d'une surface qui peut se générer par rotation d'une génératrice ayant la forme désirée autour d'un axe de révolution. Il met en oeuvre la génération d'un miroir ou d'un mandrin de forme tronconique ayant un ou des contour(s) de référence (2, 4) et qui est pourvu d'un dis-positif (11, 13, ...) de déformation du ou des contour(s) de référence suivant au moins une direction (F). Le miroir ou le mandrin ainsi généré pourra être commun à plusieurs modules ou anneaux d'un télescope de type WOLTER.

L'invention concerne également un mandrin ou un miroir présentant un contour de référence (2), caractérisé en ce qu'il est pourvu d'un dispositif (15, 16, ...) de réglage de l'angle que forment la première et la deuxième partie.

Fig. 2a

**Description**

La présente invention a pour objet un procédé de réalisation de surfaces de focalisation en particulier de faisceaux en incidence rasante.

De telles surfaces de focalisation sont par exemple des modules de miroir de type WOLTER I, destinés à la réalisation d'un télescope à faisceaux de rayons X à incidence rasante. La surface d'un module de miroir est une portion de surface de révolution (en général quadrique de révolution) autour d'un axe qui est l'axe optique du système. Tous les nombreux modules sont concentriques (et de rayon différent d'un module à l'autre) autour du même axe optique de révolution. Les surfaces de révolution de ces modules étant tronquées par deux plans perpendiculaires à l'axe de révolution, nous appellerons plus loin ces surfaces "tronconiques à génératrices asphériques". Un procédé de fabrication de tels modules est par exemple décrit dans l'Article "The results of the X-ray mirror module production for the ESA XXM Spacecraft" de D. de CHAMBURE et collaborateurs publié dans le compte-rendu de l'International Conférence on Space Optics (ICSO) qui s'est tenue à Toulouse en 1997. Ces modules de miroirs sont fabriqués à partir de mandrins doublement coniques qui sont usinés à la forme finale requise, le nombre de ces mandrins étant égal à celui des types de modules qui sont requis.

Les mandrins de révolution ayant la forme complémentaire des miroirs à réaliser, le miroir final est obtenu soit par moulage, soit par fusion d'une lame de verre mince, soit par réplication à partir de résine, soit comme décrit dans l'article précité, par dépôt métallique, en l'occurrence de nickel électrochimique.

Deux inconvénients sont générés par la réalisation de ces mandrins de révolution :

a) pour des diamètres importants, leur fabrication nécessite des machines de plus en plus grandes,
b) lorsqu'on fait varier le diamètre du module du télescope, il est nécessaire de réaliser un nouveau mandrin.

En outre, un projet de télescope tel que le projet XEUS de l'ESA, met en oeuvre un nombre important de miroirs élémentaires de type WOLTER I formant des secteurs assemblés entre eux pour former des pétales disposés selon des modules ou anneaux. La technique précitée implique la réalisation d'autant de mandrins qu'il y a de types d'anneaux (384 dans le cas de XEUS).

L'idée de base de l'invention est de réaliser des secteurs angulaires de tronc de cône à génératrice notamment asphérique désirée (au lieu d'une génératrice linéaire), par exemple un secteur angulaire notamment de 10° à 20°, et de les concevoir de manière à ce qu'ils soient obtenus par déformation. Par secteur de tronc de cône, on entend un morceau d'une surface qui peut se générer par rotation d'une génératrice ayant une forme désirée autour d'un axe de révolution. Par secteur angulaire de tronc de cône à génératrice asphérique, on entend tout morceau d'une surface qui peut se générer par rotation d'une génératrice asphérique autour d'un axe de rotation.

Une fois réalisés, les différents secteurs identiques seront assemblés de façon à fermer un module du télescope. Les différents modules formés chacun de secteurs spécifiques seront disposés afin de garder leur axe optique de révolution commun. Ils s'emboîtent les uns dans les autres.

L'invention permet d'éviter l'inconvénient a), puisque la mise en oeuvre des secteurs permet de limiter la dimension des machines servant à leur réalisation, ainsi que l'inconvénient b), puisqu'en appliquant des efforts calibrés, il est possible à partir d'une seule pièce d'obtenir des secteurs de miroirs correspondant à des diamètres de télescope différents ou bien à des modules ou d'anneaux de dimensions différentes d'un même télescope.

L'invention concerne ainsi un procédé de fabrication d'une surface de focalisation de faisceaux optiques, caractérisé en ce qu'il met en oeuvre la génération d'un secteur par exemple de tronc de cône ayant un contour de référence et qui est pourvu d'un dispositif de déformation du contour de référence suivant au moins une direction pour obtenir un secteur de tronc de cône notamment à génératrice asphérique, ayant une forme désirée. Le contour de référence, avant déformation, peut être par exemple, plan, ou tronconique, ou bien encore cylindrique.

Le procédé selon l'invention convient à la réalisation de miroirs à une seule surface ainsi que de miroirs à deux surfaces décalées angulairement et ayant une forme de secteur de tronc de cône à génératrice asphérique, par exemple les miroirs de type WOLTER.

Selon une première variante, le miroir est alors obtenu en déformant le mandrin de sorte que son contour définisse un secteur angulaire ayant une dite forme désirée complémentaire de celle qui est désirée pour le miroir, puis en réalisant le miroir par moulage, par réplication ou par dépôt métallique. Une séparation ultérieure permet d'obtenir un miroir ayant une forme désirée qui est complémentaire de ladite forme désirée du contour de référence. Selon cette variante, le miroir est ainsi obtenu directement à sa forme définitive et le mandrin peut être utilisé pour réaliser des miroirs ayant des caractéristiques différentes, obtenues en déformant le mandrin de manière appropriée. On pourra alors générer des miroirs appartenant à des modules différents d'un même télescope avec le même mandrin déformable.

Selon une deuxième variante, le miroir est directement obtenu en déposant sur le mandrin un revêtement constituant une surface réfléchissante. Le procédé est alors caractérisé en ce qu'il met en oeuvre :

- la réalisation d'un contour de référence et d'un revêtement constituant une surface réfléchissante,

- la déformation du contour de référence suivant une dite forme désirée de sorte que la surface réfléchissante définisse un miroir suivant un secteur de forme désirée.

Selon cette variante, le miroir, qui est réalisé directement présente donc une forme qui peut varier par déformation.

La surface d'origine qui constitue le contour de référence peut être plane, mais elle peut également être tronconique (à génération droite, sphérique ou éventuellement asphérique), ou de préférence cylindrique, ce qui facilite grandement le polissage initial.

Le dispositif de déformation peut comporter un dispositif de réglage de la déformation du contour de référence dans une direction transversale et/ou une direction longitudinale de façon à obtenir le contour désiré à partir de la surface d'origine.

Le procédé peut être caractérisé en ce que le contour de référence présente une première et une deuxième parties articulées entre elles, la première et la deuxième partie présentant respectivement un premier et un deuxième contour de référence et en ce que :

- la première partie est pourvue d'un dispositif de réglage de la déformation du premier contour de référence dans une direction transversale et/ou d'un dispositif de réglage de la déformation du premier contour de référence dans une direction longitudinale.
- la deuxième partie est pourvue d'un dispositif de réglage de la déformation du deuxième contour de référence dans une direction transversale et/ou d'un dispositif de réglage de la déformation du deuxième contour de référence dans une direction longitudinale.
- la zone entre la première et la seconde partie est avantageusement pourvue d'un dispositif de réglage de l'angle que forment la première et deuxième parties articulées.

L'invention concerne également un mandrin présentant un contour de référence, caractérisé en ce qu'il est pourvu d'un dispositif de déformation dudit contour de référence suivant au moins une direction.

Le mandrin comporte avantageusement un dispositif de réglage de la déformation du contour de référence suivant une direction transversale et/ou un dispositif de réglage de la déformation du contour de référence suivant une dimension longitudinale.

Selon un mode de réalisation préféré, le mandrin est caractérisé en ce que le contour de référence présente une première et une deuxième parties articulées entre elles, la première et la deuxième partie présentant respectivement un premier et un deuxième contour de référence et avantageusement un angle réglable entre elles de façon à générer par exemple des secteurs de modules différents d'un télescope du type WOLTER, les modules ayant donc un axe de révolution et des points de focalisation communs.

Selon un mode de réalisation avantageux, le mandrin présente au moins une partie dont le contour de référence est réglable suivant la direction transversale, et elle présente deux paires de pattes d'extrémité, chaque partie recevant à chaque extrémité un vérin de réglage de la déformation dans la direction transversale et un vérin de réglage de l'angle entre les deux parties sans nécessiter de vérin spécifique de réglage de la déformation dans une direction longitudinale de chaque partie. Ce dispositif peut, dans de nombreux cas, suffire pour passer d'un contour d'un anneau ou module à celui des anneaux ou modules suivants.

D'autres caractéristiques et avantages de l'invention apparaîtront mieux à la lecture de la description qui va suivre, donnée à titre d'exemple non limitatif, en liaison avec les dessins ci-annexés, dans lesquels :

- les Figures 1a et 1b représentent respectivement en perspective et en vue de dessous, un premier mode de réalisation de l'invention, adapté au cas d'une déformation appliquée dans une direction ;
- les Figures 2a et 2b représentent un deuxième mode de réalisation de l'invention, adapté au cas d'une déformation appliquée dans une direction, pour un miroir en deux parties articulées entre elles, avec variation de l'angle entre les deux parties ;
- et les Figures 4a et 4b représentent un mode de réalisation préféré de l'invention, qui permet d'appliquer dans deux directions transversale et longitudinale, une déformation à un mandrin en deux parties articulées entre elles, avec variation de l'angle entre les deux parties, et qui convient en particulier au cas d'une optique du type WOLTER I illustrée à la Figure 3.

L'invention a donc pour but de générer plusieurs surfaces susceptibles en particulier d'être utilisées pour focaliser des faisceaux optiques en incidence rasante, cela avec un seul système déformable.

Ces surfaces peuvent avoir des formes voisines d'une portion de cône, à génératrice asphérique, en particulier, parabolique, hyperbolique ou elliptique.

Ces surfaces peuvent être concaves ou convexes.

Ces formes complexes variables peuvent être appliquées :

- soit à des mandrins utilisés pour effectuer ultérieurement des copies de miroirs par résine, par nickelage ou par moulage, miroirs qui seront assemblés, par exemple pour générer des anneaux d'un télescope (de type WOLTER pour rayons X par exemple) ;
- soit directement à des miroirs de focalisation (simple ou double).

Le dispositif de déformation peut être utilisé :

- pour générer ce type de surface à partir d'une surface plane ou cylindrique ou conique,
- pour passer d'une forme d'un anneau à un autre ou à plusieurs autres.

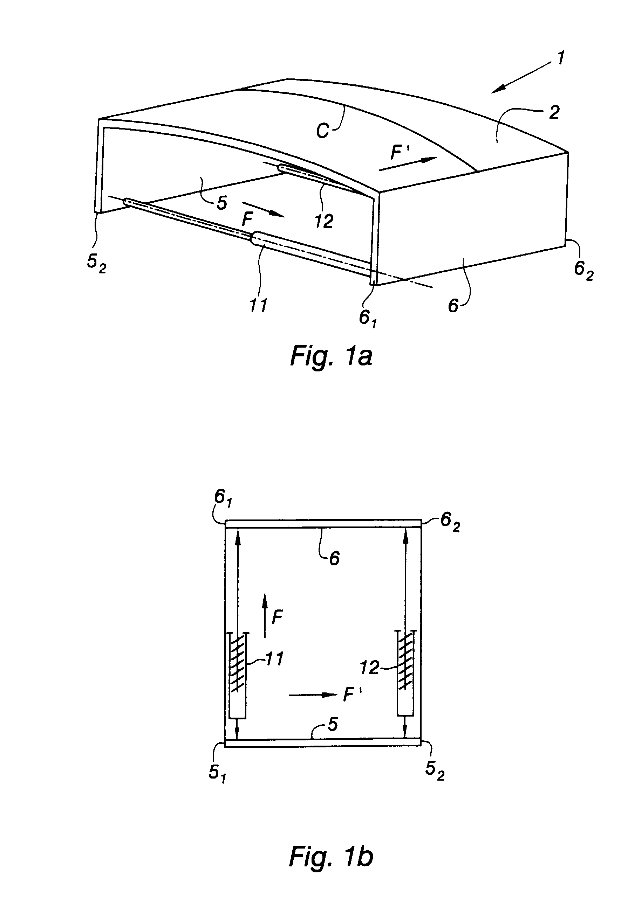

Le dispositif 1 représenté aux Figures 1a et 1b présente un contour de référence 2 qui se prolonge perpendiculairement à deux de ses extrémités par des panneaux 5 et 6 présentant des bords $5_1$, $5_2$ et $6_1$, $6_2$ au voisinage desquels sont accrochés les extrémités de vérins 11 et 12, qui sont d'un type permettant un réglage de précision. L'application d'une force rapprochant ou éloignant les panneaux 5 et 6 permet d'appliquer un moment au contour 2 et de faire varier la courbure du contour 2 dans la direction transversale F. Si une même force est appliquée aux deux vérins, la variation de courbure transversale C du contour 2 sera constante d'un bord à l'autre du contour 2 quand on se déplace dans la direction longitudinale F' perpendiculaire à la direction F. Par contre, une force de déformation différente appliquée par les vérins 11 et 12 permet de faire légèrement varier la courbure C du contour 2 lorsque l'on se déplace dans la direction F' ; ceci est en particulier le cas lorsque l'on veut passer d'une forme cylindrique à une forme tronconique.

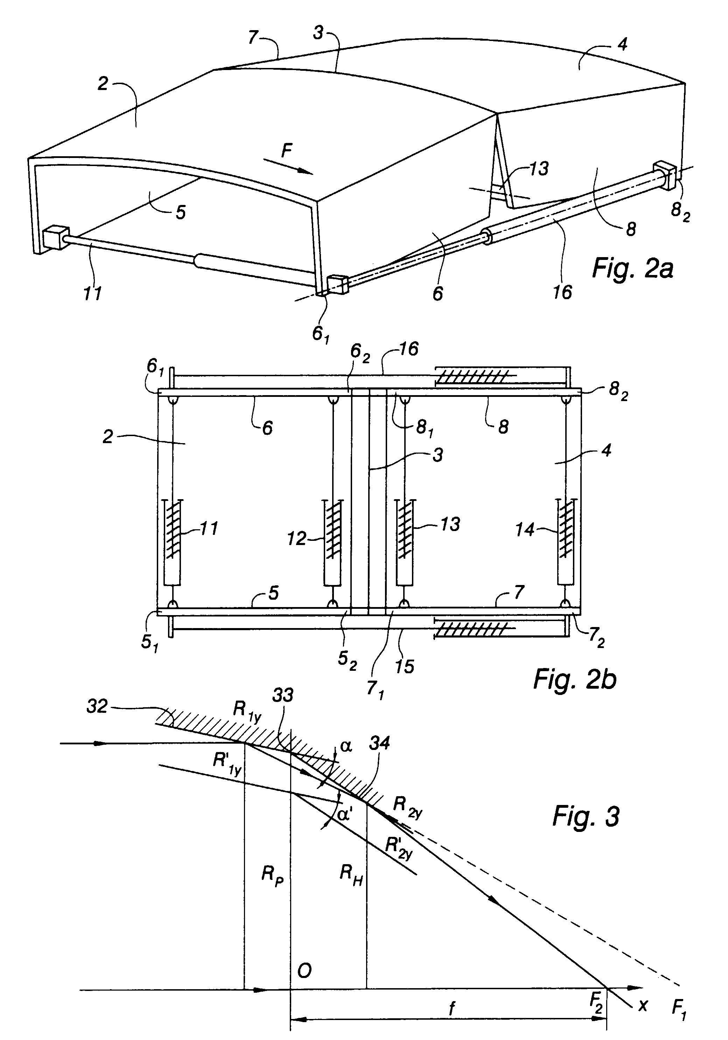

Le dispositif représenté aux Figures 2a et 2b met en oeuvre deux dispositifs élémentaires selon les Figures 1a et 1b, qui sont articulés entre eux autour d'une ligne 3. Le premier dispositif présente un contour de référence 2, des panneaux 5 et 6 et des vérins 11 et 12, et le deuxième dispositif présente un contour de référence 4, des panneaux 7 et 8 et des vérins 13 et 14 parallèles aux vérins 11 et 12 et disposés sensiblement de la même façon par rapport aux panneaux 7 et 8 que sont les vérins 11 et 12 par rapport aux panneaux 5 et 6. Cette disposition permet un réglage indépendant des courbures des contours de référence 2 et 4. Ce réglage une fois effectué, l'angle a entre les contours de référence 2 et 4, qui sont articulés en 3, peut être réglé en agissant sur des vérins 15 et 16 fixés au voisinage des extrémités $5_1$ et $7_2$ des panneaux 5 et 7 pour le vérin 15 et des extrémités $6_1$ et $8_2$ des panneaux 6 et 8 pour le vérin 16. Ce dispositif convient pour une grande partie des besoins de variation de surfaces complexes.

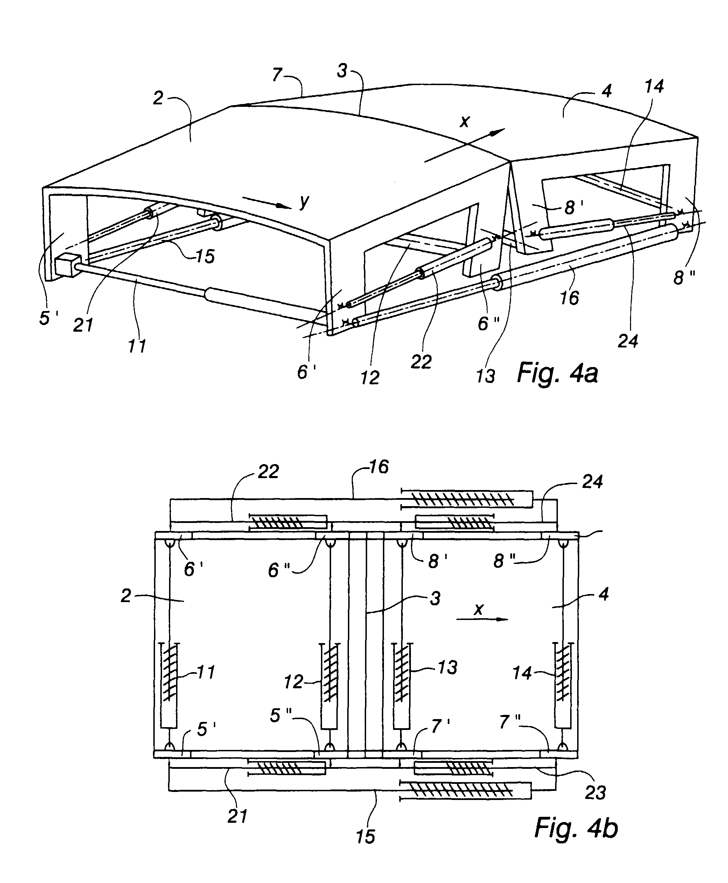

Le mode de réalisation des Figures 4a et 4b permet de faire varier indépendamment la courbure des contours de référence 2 et 4 dans les directions F et F' précitées, tout en conservant la possibilité de faire varier l'angle a à l'aide des vérins 15 et 16. A cet effet, les panneaux 5, 6, 7 et 8 ne sont plus d'un seul tenant, et ils présentent deux parties d'extrémité 5', 5"; 6', 6" ; 7', 7" ; et 8', 8". Des vérins 21 et 22 dont les extrémités sont solidaires respectivement des pattes 5', 5" pour le vérin 21 et des pattes 6' et 6" pour le vérin 23, permettent de régler la courbure du contour de référence 2 perpendiculairement au réglage de courbure qui est procuré par l'action des vérins 11 et 12. Il en va de même en ce qui concerne le contour de référence 4 avec les vérins 23 et 24 dont les extrémités sont solidaires des pattes 7' et 7" pour le vérin 23, et des pattes 8' et 8" pour le vérin 24. Les vérins 23 et 24 permettent de régler la courbure du contour de référence 4 perpendiculairement au réglage de courbure procuré par les vérins 13 et 14.

Bien entendu, ce mode de réalisation peut être mis en oeuvre pour un seul contour de référence 2.

Le dispositif des Figures 4a et 4b permet de générer les variations de tous les types de surfaces complexes et en particulier d'une optique de type WOLTER I, illustrée à la Figure 4 et qui présente une première surface parabolique 32 dont le foyer $F_1$ constitue un foyer intermédiaire de l'optique WOLTER I et une deuxième surface 34 hyperbolique qui permet de définir le foyer final $F_2$ (commun à tous les anneaux) et situé sur l'axe Ox à une distance f de la ligne d'articulation 33 entre les surfaces 32 et 34 (voir Figure 3). L'axe Ox est un axe de révolution commun à tous les anneaux ou modules.

Le mode de réalisation des Figures 4a et 4b permet de réaliser un mandrin concernant un secteur angulaire, par exemple de 10° à 20°, pour une optique de type WOLTER 1. On remarque que le système d'accrochage des vérins est entièrement dégagé du plan des surfaces 2 et 4, ce qui fait que ces surfaces sont entièrement dégagées et disponibles pour la réalisation de l'optique. Dans le cas de l'application à un télescope de type WOLTER I, on place le dispositif selon les Figures 4a et 4b à la forme désirée et on réalise chaque miroir par dépôt métallique ou par moulage à partir de résine, et séparation ultérieure du miroir du mandrin.

Le miroir est un secteur de tronc de cône concave et donc présentant une surface de révolution autour de l'axe x dont l'origine 0 est choisie au plan d'intersection entre la parabole 32 et l'hyperbole 34 (voir Figure 3).

Dans la direction x (qui est celle de la flèche F' à la Figure 1a), le rayon Rp(x) de la section parabolique 32 est définie par :

$$Rp(x) = \sqrt{A(B+f\text{-}x)} \qquad (x < 0)$$

A et B sont des paramètres spécifiés qui caractérisent l'optique, f désigne la distance focale $OF_2$.

Le rayon $R_H(x)$ de la section hyperbolique 34est défini par :

$$R_H(x) = \sqrt{C(D+f\text{-}x)^2+E} \qquad (x > 0)$$

C, D et E sont des paramètres spécifiées qui caractérisent l'optique.

Ces paramètres permettent de déterminer les actions à appliquer aux divers vérins, en particulier en assimilant les profils parabolique 32 et hyperbolique 34 à des arcs de cercle, en première approximation.

Dans le cas notamment de l'application envisagée à une optique WOLTER I, les miroirs sont réalisés par dépôt métallique ou moulage et séparation ultérieure, à partir de mandrins préalablement déformés selon le profil désiré. La mise en oeuvre d'un mandrin cylindrique à l'état non déformé permet de faciliter le polissage.

Pour d'autres applications, les surfaces 2 et 4 sont métallisées de manière à ce qu'elles constituent des miroirs déformables. Là encore, le fait de partir d'un mandrin cylindrique ou plan à l'état non déformé permet de faciliter le polissage. Comme le montrent les dessins, les vérins sont espacés des surfaces 2 et 4 et il serait aisé de les distribuer à l'intérieur du périmètre délimité de ces surfaces, de manière à réaliser des miroirs déformables modulaires faciles à assembler côte à côte.

Dans la direction longitudinale Ox, une même force de déformation appliquée par les vérins 21 et 22, permet d'approximer le profil parabolique 32 (voir Figure 3). Une même force de déformation appliquée par les vérins 23 et 24 permet d'approximer le profil hyperbolique 34.

Dans la direction transversale $O_y$, les courbures $R_{1y}$ des profils 32 et $R_{2y}$ du profil 34 sont obtenues par des forces différentes appliquées aux vérins 11 et 12 d'une part, et 13 et 14 d'autre part.

## Revendications

**1.** Procédé de fabrication d'une surface de focalisation de faisceaux optiques, caractérisé en ce qu'il met en oeuvre la génération d'un secteur ayant un contour de référence et qui est pourvu d'un dispositif de déformation du contour de référence suivant au moins une direction, pour obtenir un secteur angulaire de tronc de cône ayant une forme désirée.

**2.** Procédé selon la revendication 1, caractérisé en ce que le secteur angulaire de tronc de cône est à génératrice asphérique.

**3.** Procédé selon une des revendications 1 ou 2, caractérisé en ce qu'il met en oeuvre :

- la déformation du contour de référence suivant une dite forme désirée, pour définir un secteur angulaire de mandrin ayant une forme complémentaire de celle désirée pour un miroir,
- la réalisation par dépôt métallique, par réplication par résine ou moulage à partir du contour de référence, d'un revêtement constituant ledit miroir,
- la séparation du miroir, qui présente une surface de référence dont la forme est complémentaire de ladite forme désirée du contour de référence du mandrin.

**4.** Procédé selon la revendication 3, caractérisé en ce qu'un même secteur angulaire de mandrin est utilisé pour réaliser une pluralité d'éléments de miroir ayant des formes différentes, tels que des anneaux d'un miroir de télescope.

**5.** Procédé selon une des revendications 1 ou 2, caractérisé en ce qu'il met en oeuvre :

- le dépôt sur le contour de référence d'un revêtement constituant une surface réfléchissante,
- la déformation du contour de référence suivant une dite forme désirée de sorte que la surface réfléchissante définit un miroir suivant un secteur angulaire de forme désirée constitué par un secteur angulaire de tronc de cône à génératrice asphérique.

**6.** Procédé selon une des revendications précédentes, caractérisé en ce que le dispositif de déformation est pourvu d'un dispositif (11, 12) de réglage de la déformation dans une direction transversale.

**7.** Procédé selon une des revendications précédentes, caractérisé en ce que le dispositif de déformation est pourvu d'un dispositif (21, 22) de réglage de la déformation dans une direction longitudinale.

**8.** Procédé selon une des revendications 1 à 5, caractérisé en ce que le contour de référence présente une première (2) et une deuxième (4) parties articulées entre elles le long d'une ligne d'articulation (3), la première (2) et la deuxième (4) partie présentant respectivement un premier et un deuxième contour de référence et en ce que :

- la première partie (2) est pourvue d'un dispositif (11, 12) de réglage de la déformation du premier contour de référence dans une direction transversale et/ou d'un dispositif (21, 22) de réglage de la déformation du premier contour de référence dans une direction longitudinale.
- la deuxième partie (4) est pourvue d'un dispositif (13, 14) de réglage de la déformation du deuxième contour de référence (4) dans une direction transversale et/ou d'un dispositif (23, 24) de réglage de la déformation du deuxième contour de référence dans une direction longitudinale.

**9.** Procédé selon la revendication 8, caractérisé en ce que le dispositif de déformation présente un dispositif de réglage de l'angle (a) que forment la première (2) et la deuxième (4) parties articulées.

**10.** Procédé selon l'une des revendications précédentes, caractérisé en ce que le contour de référence est plan, cylindrique ou conique.

**11.** Procédé selon l'une des revendications 1 à 9, caractérisé en ce que le contour de référence est tronconique, notamment à génération asphérique.

**12.** Procédé selon la revendication 11, caractérisé en ce que le contour de référence correspond à un premier anneau de télescope de type WOLTER et en ce que la forme désirée correspond à un deuxième anneau de télescope de type WOLTER.

**13.** Système présentant un contour de référence, caractérisé en ce qu'il présente un contour de référence et en ce qu'il est pourvu d'un dispositif de déformation dudit contour de référence suivant au moins une direction pour obtenir un secteur de tronc de cône.

**14.** Système selon la revendication 13, caractérisé en ce que le secteur de tronc de cône est à génératrice asphérique.

**15.** Système selon une des revendications 12 ou 13, caractérisé en ce qu'il comporte un dispositif (11, 12) de réglage de la déformation du contour de référence (2) suivant une direction transversale et/ou un dispositif (21, 22) de réglage de la déformation du contour de référence (2) suivant une direction longitudinale.

**16.** Système selon la revendication 15, caractérisé en ce que le contour de référence présente une première (2) et une deuxième (4) parties articulées entre elles le long d'une ligne d'articulation (3), la première (2) et la deuxième (4) partie présentant respectivement un premier et un deuxième contour de référence et en ce que :

- la première partie (2) est pourvue d'un dispositif (11, 12) de réglage de la déformation du premier contour de référence dans une direction transversale et/ou d'un dispositif (5, 6) de réglage de la déformation du premier contour de référence dans une direction longitudinale,
- la deuxième partie (4) est pourvue d'un dispositif (13, 14) de réglage de la déformation du deuxième contour de référence dans une direction transversale et/ou d'un dispositif (23, 24) de réglage de la déformation du deuxième contour de référence dans une direction longitudinale.

**17.** Système selon la revendication 15, caractérisé en ce que le dispositif de déformation présente un dispositif de réglage de l'angle (a) que forment la première (2) et la deuxième (4) parties articulées.

**18.** Système selon l'une des revendications 13 à 17 présentant au moins une partie dont le contour de référence est réglable suivant la direction transversale et la direction longitudinale, caractérisé en ce qu'elle présente deux paires de pattes (5', 5", 6', 6") d'extrémité dont chacune reçoit une extrémité d'un vérin (11, 12, 13, 14) de réglage de la déformation dans la direction transversale et d'un vérin (21, 22, 23, 24) de réglage de la déformation dans une direction longitudinale.

**Fig. 1a**

**Fig. 1b**

*Fig. 2a*

*Fig. 2b*

*Fig. 3*

Fig. 4a

Fig. 4b

**Office européen des brevets**

## RAPPORT DE RECHERCHE EUROPEENNE

Numéro de la demande

EP 99 40 3263

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | EP 0 410 686 A (CHROMEX INC) 30 janvier 1991 (1991-01-30) * page 9, ligne 16 - page 11, ligne 51; figures 3D,4,5D,6A * | 1,2,6,7, 10-13 | G02B26/08 G02B5/10 G02B7/182 G21K1/06 |
| A | W. EGLE & AL: "Production of the first mirror shell for the European Space Agency's XMM telescope by application of a dedicated large area replication technique" OPTICAL ENGINEERING, vol. 29, no. 10, 31 octobre 1990 (1990-10-31), pages 1267-1272, XP002114969 * alinéa '0003!; figures 1,2 * | 1-16 | |
| A | EP 0 343 861 A (TOKYO SHIBAURA ELECTRIC CO) 29 novembre 1989 (1989-11-29) * colonne 3, ligne 44 - colonne 4, ligne 57; figures 2,3 * | 1,11 | |
| A | US 4 093 351 A (PERKINS CHARLES W ET AL) 6 juin 1978 (1978-06-06) * colonne 2, ligne 43 - colonne 3, ligne 60; figures 1-4 * | 1,11 | DOMAINES TECHNIQUES RECHERCHES (Int.Cl.7) G02B G21K |

Le présent rapport a été établi pour toutes les revendications

| Lieu de la recherche | Date d'achèvement de la recherche | Examinateur |
|---|---|---|
| LA HAYE | 7 avril 2000 | Hervé, D |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**     EP 99 40 3263

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

07-04-2000

| Document brevet cité au rapport de recherche | | Date de publication | Membre(s) de la famille de brevet(s) | | Date de publication |
|---|---|---|---|---|---|
| EP 0410686 | A | 30-01-1991 | US | 4932768 A | 12-06-1990 |
| | | | US | 5089915 A | 18-02-1992 |
| | | | CA | 2018758 A | 25-01-1991 |
| | | | JP | 3148602 A | 25-06-1991 |
| EP 0343861 | A | 29-11-1989 | JP | 1299500 A | 04-12-1989 |
| | | | JP | 1904730 C | 08-02-1995 |
| | | | JP | 6031888 B | 27-04-1994 |
| | | | US | 4969725 A | 13-11-1990 |
| US 4093351 | A | 06-06-1978 | AUCUN | | |

EPO FORM P0460

Pour tout renseignement concernant cette annexe : voir Journal Officiel de l'Office européen des brevets, No.12/82